# EUROPEAN PATENT APPLICATION

(11) **EP 2 340 782 A1**
(43) Date of publication of application: **06.07.2011**
(21) Application number: 09817118.4
(22) Date of filing: 02.10.2009
(51) Int. Cl.: A61C 5/04

(54) **METHOD AND DEVICE FOR REMOVING METALLIC FRAGMENTS AND METALLIC ELEMENTS FROM DENTAL ROOT CANALS**

(30) Priority: 03.10.2008 BR PI0809900
(71) Applicant: Instituto Alberto Luiz Coimbra De Pós Graduação E Pesquisa De Engenharia-COPPE/UFRJ, 21949-900 Rio de Janeiro - RJ (BR)
(72) Inventor: BARBOSA ORMIGA GALVÃO, Fabiola, CEP: 22441-013 Rio de janeiro, RJ (BR); GOMES DA CUNHA PONCIANO, José Antônio, CEP: 25685-250 Petrópolis, RJ (BR)
(74) Representative: Johansson, Lars E.
(86) International application number: PCT/BR2009/000304
(87) International publication number: WO 2010/037194

(57) **Abstract**

The invention relates to a method and device for removing metallic fragments and elements from dental root canals using electrodes that must be coupled to a power supply and control module and be in contact with a solution having a variable composition, wherein one of the electrodes must be in contact with the fragment being removed from the root canal.

## Description

### TECHNICAL FIELD

The proposed innovation describes a device for removing fragments and metallic elements from dental root canals and the process to remove those elements using electrodes.

### PREVIOUS TECHNIQUES

Dental pulp is inside the tooth and it is a tissue that consists mainly from nerves and blood vessels. When the dental element is compromised by irreversible inflammation, dental pulp necrosis or when a prosthetic planning is required, a dentist intervention by an endodontic treatment is necessary. This treatment consists of an access on the dental pulp cavity, dental pulp removal, cleaning and modeling of the dental root canals and then the tridimensional filling of these canals with filling material.

The cleaning and modeling of the dental root canals are realized by metallic instruments and irrigant solution. The removal of the dental root pulp is one of the most difficult steps of the treatment because, sometimes, the fracture of metallic instruments can occur inside of the dental root canal leaving fragments on the interior of it. So, the presence of fragments from endodontic instruments can avoid the conclusion of the cleaning and modeling of the dental root canal making the treatment evolution difficult.

Besides the related problem of instruments fragments on the interior of dental root canals it is usual to make again the treatment of those canals. For the complete removal of the anterior filling material a metallic instrument is frequently used. However that removal procedure has a high level of difficulty, extremely working and slow. That way, in some cases the endodontic retreatment is discarded and the tooth removal is indicated.

The fracture of the dental intra root pin can also keep metallic fragments into the root canals. If so, it's necessary to remove it allowing the repair procedure of the damaged element.

Different techniques had been described for the removal of fractured instruments and silver cones from the interior of dental root canals.

The patent document US20030124485 describes a dispositive for mechanical removal of fragments from the interior of dental root canals; however, do not describe the use of electrodes or electrochemical process how this document proposes.

The patent document US5951286 describes a dispositive for mechanical removal of dental intra root pin; that way, do not describe the use of electrodes or electrochemical process how this document proposes.

The patent document PI0005652-9 describes a dispositive and a technique for mechanical removal of fragments from the interior of dental root canals; that way, do not describe the use of electrodes or electrochemical process how this document proposes.

The patent document US6227855 describes a dispositive for mechanical removal of fragments from the interior of dental root canals; however, do not describe the use of electrodes or electrochemical process how this document proposes.

The patent document US6280197 describes a dispositive for mechanical removal of dental intra root pin from the interior of dental root canals; that way, do not describe the use of electrodes or electrochemical process how this document proposes.

The patent document US4909789 describes a dispositive for mechanical removal of fragments from the interior of dental root canals; however, do not describe the use of electrodes or electrochemical process how this document proposes.

The patent document US5879160 describes a dispositive for mechanical removal of fragments from the interior of dental root canals; however, do not describe the use of electrodes or electrochemical process how this document proposes.

Dispositive that use electrodes are described for different application on the dental area.

The patent document WO2006/037968 describes a dental dispositive made by electrodes with defined application for caries diagnoses. That way, do not present applicability for the endodontic treatment related to the removal of materials that are obstructing the dental root canals.

The patent document US006090053A describes a dental dispositive made by electrodes with application related to the status of dental prostheses. That way, do not present applicability for the endodontic treatment related to the removal of materials that are obstructing the dental root canals.

The described techniques for the removal of metallic fragments from the interior of dental root canals require the wear of a considerable portion of dentine, which can weaken the dental structure or increase the risk of perforation. In addition, these techniques are heavily dependent from the professional skill and, in most of cases, require the use of a clinic microscope.

### DETAILED DESCRIPTION OF THE INVENTION

This invention consists in one dispositive for the removal of metallic elements from the interior of dental root canals characterized by contain two or more electrodes coupled in a control and alimentation module. The electrodes must be in contact with a solution of variable composition that must be renewed during the removal procedure. One of the electrodes must be in contact with the metallic fragment to be removed.

Specifically, the general configuration of the equipment consists in one power supply module that feed a set of two or more electrodes that are inserted in the interior of the dental root canal filled with one variable composition electrolyte. This composition can be chloride's ions and their derivatives, fluoride's ions and their derivatives or sulfate's ions and their derivatives with different concentrations and variable pH.

The process is composed by the following steps: put the solution in the interior of dental root canal, realize contact between one of electrodes with the metallic fragment inside the dental root canals with solution, realize contact between the other electrode with the solution and activate the feed external circuit. The solution must be renewed during the removal process. Treatment duration varies in accordance to dimensions, geometry and fragment or metallic element material to be removed, as selection of operational conditions for the device.

### DETAILED DESCRIPTION OF PREFERRED EMBODIMENTS

Description of preferred embodiments should not be considered as a limited scope of the presented invention because the equipment should present several configurations in accordance to user criteria.

### FIGURES DESCRIPTION

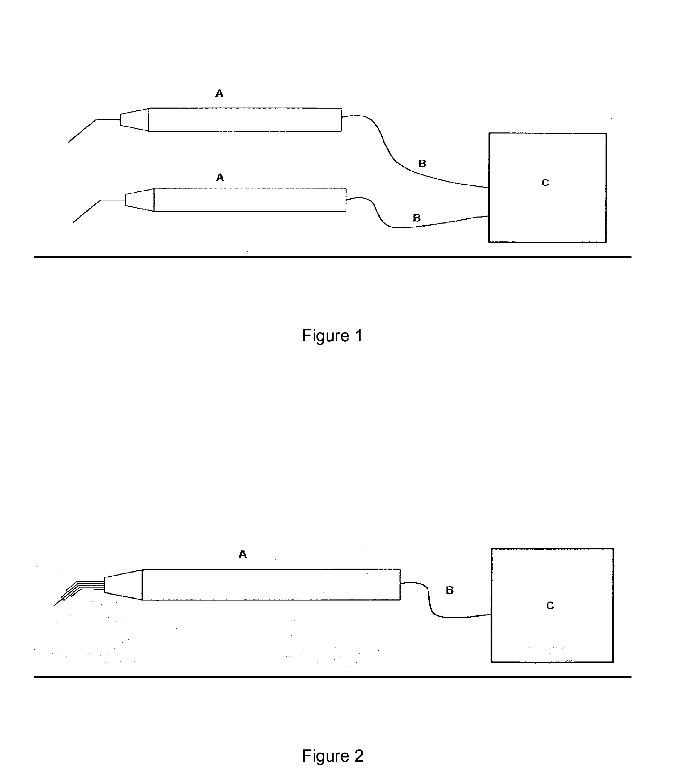

Figure 1 represents a device composed by two distinct electrodes where (A) represent a pen with one distinct electrode, (B) represent the wire that connects the electrode to the power supply and control module and (C) represent the device power supply and control module.
Figure 2 represents a device composed by two electrodes presented in the same pen, where (A) represent a single pen with electrodes, (B) represent the wire that connects the electrode to the power supply and control module and (C) represent the device power supply and control module.

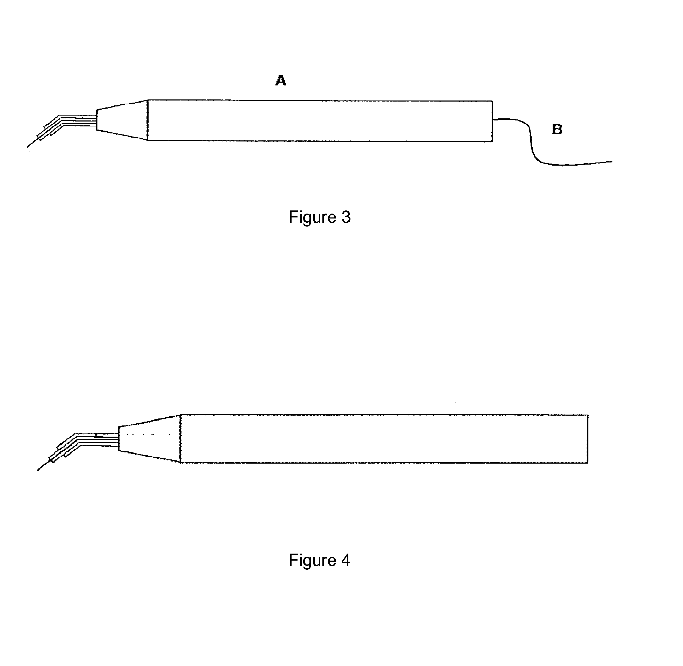

Figure 3 represents a device composed by two electrodes and the power supply and control module presented in the same pen, where (A) represent a single pen with electrodes and the power supply and control module, (B) represent the wire that connects the device to an external energy source.
Figure 4 represents a device composed by two electrodes, power supply and control module and a internal energy source presented in a single pen.

### PROPOSED EQUIPMENT ADVANTAGES

The described device allows the removal of metallic fragments and elements from the interior of dental root canals in a reduced time once the process inducted by electrodes can be faster with the execution

The described device allows the removal of metallic fragments and elements from the interior of dental root canals with more safety because it not requires mechanical removal of dentine from the walls of dental root canals, avoiding dental root fragility.

Device used in the described form consists in a less complexity procedure for execution if compared with the mechanical procedures for removal. More simplicity in execution reduces also the skill level of the professional in relation to the treatment success.

The described device dismisses the use of auxiliary equipments with higher complexity as microscope and ultrasonic examination, both required on mechanical removal operations.

## Claims

1. DEVICE FOR REMOVING METALLIC FRAGMENTS AND METALLIC ELEMENTS FROM DENTAL ROOT CANALS **characterized by** contain two or more electrodes coupled into an external power supply and control module.

2. DEVICE FOR REMOVING METALLIC FRAGMENTS AND METALLIC ELEMENTS FROM DENTAL ROOT CANALS **characterized by** the contact between electrodes with a variable composition solution and contacts between one of the electrodes with the metallic fragment to be removed.

3. DEVICE FOR REMOVING METALLIC FRAGMENTS AND METALLIC ELEMENTS FROM DENTAL ROOT CANALS **characterized by** a variable composition electrolyte made by chloride's ions and their derivatives, fluoride's ions and their derivatives or sulfate's ions and their derivatives with different concentrations and variable pH, and others.

4. DEVICE FOR REMOVING METALLIC FRAGMENTS AND METALLIC ELEMENTS FROM DENTAL ROOT CANALS **characterized by** contain two or more electrodes coupled into an internal power supply and control module from device.
